## Europäisches Patentamt

## European Patent Office

## Office européen des brevets

(11) Veröffentlichungsnummer: **0 043 453**
**B1**

(12) **EUROPÄISCHE PATENTSCHRIFT**

(45) Veröffentlichungstag der Patentschrift:
**12.10.83**

(21) Anmeldenummer: **81104344.7**

(22) Anmeldetag: **05.06.81**

(51) Int. Cl.³: **G 06 K 7/00,** G 06 K 11/00, G 07 C 5/00

(54) Diagrammauswertegerät für die Unfalldiagrammauswertung von Fahrtschreiber-Diagrammen.

(30) Priorität: **24.06.80 DE 3023495**

(43) Veröffentlichungstag der Anmeldung:
**13.01.82 Patentblatt 82/2**

(45) Bekanntmachung des Hinweises auf die Patenterteilung:
**12.10.83 Patentblatt 83/41**

(84) Benannte Vertragsstaaten:
**AT DE FR GB IT**

(56) Entgegenhaltungen:
**DE-B-1 263 322**
**US-A-3 075 411**
**US-A-3 924 338**
**US-A-4 112 580**

(73) Patentinhaber: **Kienzle Apparate GmbH,**
**Heinrich-Hertz-Strasse Postfach 1650,**
**D-7730 Villingen-Schwenningen (DE)**

(72) Erfinder: **Spormann, Horst, Tallardstrasse 9,**
**D-7730 Villingen-Schwenningen (DE)**
Erfinder: **Vögtlin, Karl, Mannheimer Strasse 9,**
**D-7730 Villingen-Schwenningen (DE)**

ACTORUM AG

Diagrammauswertegerät für die Unfalldiagrammauswertung von Fahrtschreiber-Diagrammen

Die Erfindung bezieht sich auf ein Diagramm-scheibenauswertegerät für die Unfalldiagramm-auswertung für Fahrtschreiber-Diagrammschei-ben. In der DE-AS 1 263 322 ist ein Gerät zum mikroskopischen Auswerten von Fahrtschreiber-Diagrammen beschrieben. Dieses Gerät dient hauptsächlich dem Zweck, Geschwindigkeits- und Wegdiagramme der Fahrtschreiber-Diagrammscheiben dann auszuwerten, wenn das entsprechende Fahrzeug einen Unfall gehabt hat. Bei dieser Unfalldiagrammauswertung ist es erforderlich, den Geschwindigkeitsverlauf für die letzten 200 bis 300 m vor dem Unfallereignis möglichst genau zu rekonstruieren, weil sich hieraus ergibt, wie viele Sekunden bzw. wie viele Meter vor dem Unfallort der Fahrer seine Geschwindigkeit entweder durch Wegnehmen des Gases oder durch Betätigen der Bremse verringert hat und mit welcher Geschwindigkeit dann der Unfall geschehen ist. Es wird also das in Abhängigkeit von der Zeit aufgezeichnete Geschwindigkeitsdiagramm ausgewertet, und es wird zusätzlich noch das entsprechende Wegdiagramm zu Hilfe genommen, um eine Kontrolle der Auswertung des Geschwindigkeitsdiagrammes vorzunehmen.

Bei einer derartigen Unfalldiagrammauswertung ist es wesentlich, den genauen zeitlichen Verlauf der Geschwindigkeitskurve auswerten zu können. Geht man einmal davon aus, dass bei einer Beschleunigung des Fahrzeuges von 0 bis ∞ in der Zeit von 0 sec. der Geschwindigkeitsschreiber die individuelle «Leitlinie» des auszuwertenden Diagrammes aufzeichnet, dann sind Abweichungen von dieser «Leitlinie» im Ver-lauf des Geschwindigkeitsdiagrammes als Zeit-vortrieb ausnutzbar zur Diagrammauswertung im Sinne einer Rekonstruktion des Geschwindigkeitsverlaufes vor dem Unfall.

Bei dem bekannten Diagrammauswertegerät wird die Diagrammscheibe über ein Zahnrädergetriebe in Vorwärts- und Rückwärtsrichtung über einen kleinen Winkelweg manuell angetrieben, und man kann dann mit Hilfe einer Skala und eines Zeigers ablesen, wie gross der Zeitvortrieb zwischen zwei Punkten des Geschwindigkeitsdiagrammes war. Die Anwendung eines vor- und rückwärtsdrehenden Zahnrädergetriebes für den Zeitvortrieb der Diagrammauflage hat den Nachteil, dass hier immer das nicht vermeidbare Zahnspiel zu berücksichtigen ist. Hierzu muss erwähnt werden, dass jede Zeitmessung bei der Diagrammauswertung mehrfach durchgeführt wird, um eine Kontrolle darüber zu haben, ob der Auswertevorgang auch stimmt. Will man das Diagramm aber mehrmals auswerten, dann ist es bei dem bekannten Gerät erforderlich, die Diagrammscheibe vorwärts und rückwärts zu drehen. Jedes Mal beim Vorwärts- und Rückwärtsdrehen entsteht Zahnspiel, und dieses Zahnspiel muss erst herausgedreht werden, bevor die tatsächliche Messung erfolgen kann. Das Auswerten der Diagramme ist daher auf diese Art und Weise mit einem unnötigen Zeitaufwand verbunden, zumal der Auswerter dann noch gezwungen ist, bei jeder Messung genau darauf zu achten, wann der eigentliche Messvorgang beginnt, wann also das Zahnspiel beseitigt ist. Geht man davon aus, dass jede Messung drei Mal durchgeführt werden muss und dass die Messung selbstverständlich nur im Vorwärtsdrehen erfolgen kann, dann muss für die Auswertung jeder Scheibe beim Vorwärts- und Rückwärtsdrehen des Zahnrädergetriebes 6 Mal zunächst das Zahnspiel überwunden werden, bevor eine Messung genau durchgeführt werden kann.

Ziel der Erfindung ist es nun, diesen Diagrammscheibenzeitvortrieb zu vereinfachen und insbesondere auch seine Handhabung so zu verbessern, dass die Auswertung mit einem geringeren Zeitaufwand möglich ist. Angesichts des oben zum Stande der Technik Gesagten muss es wesentlichstes Anliegen sein, den Zeitvortrieb in Vorwärts- und Rückwärtsrichtung so bewerkstelligen zu können, dass kein Zahnspiel mehr auftritt, wodurch Messungen des Zeitvortriebes sowohl im Vorwärtsdrehen als auch im Rückwärtsdrehen möglich sind.

Entsprechend dieser Aufgabenstellung geht die Erfindung aus von einem Diagrammscheiben-auswertegerät für die Unfalldiagrammauswer-tung von Fahrtschreiber-Diagrammscheiben, bei dem die die auszuwertenden Diagrammscheiben tragende Diagrammauflage zur Ermittlung der Zeitwerte bei der Aufwertung über Antriebsmittel mindestens über einem kleinen Winkelweg manuell antreibbar ist und bei dem Mess- und Anzeigemittel vorgesehen sind, um den Zeitvortrieb zwischen zwei Punkten des Diagrammes als Zeitwert sichtbar zu machen und ist dadurch gekennzeichnet, dass mit der Diagrammauflage ein Hebel verbunden ist und dass als Antriebsmittel ein Mikrometer auf den Hebel an einem solchen Radius vom Mittelpunkt der Diagrammauflage einwirkt, dass im Zeitvortrieb der Diagrammauflage ein Weg des Hebels von 1/100 mm gemessen am Angriffspunkt des Mikrometers am Hebel einer Sekunde entspricht.

Es sei an dieser Stelle bemerkt, dass es aus der Optik – US-A- 4 112 580 – bereits bekannt ist, eine Sinusplatte winkelmässig exakt zu verstellen mit Hilfe eines auf einen Hebel einwirkenden Mikrometers, wobei der Verstellweg des Mikrometers direkt proportional ist der winkelmässigen Verstellung der Sinus-Platte.

Die Erfindung geht aus von der Überlegung, dass einerseits digital anzeigende Mikrometer mit einem Stellglied so genau arbeiten, dass Hundertstel mm genau ablesbar sind und dass beim Vorwärts- und Rückwärtsdrehen des Stellgliedes keinerlei Zahnspiel auftritt. Der Taststift des Mikrometers wirkt dann auf den Hebel auf einem relativ langen Radius ein, wobei der Weg des Taststiftes nicht einem Kreisbogen sondern der entsprechenden Sehne entspricht. Bei der Länge des Hebelarmes, der hier verwendet wird, und bei dem relativ kleinen Zeitvorschub von beispielsweise 1/48 einer 360° Umdrehung der Diagrammscheibe (ca. eine halbe Stunde) ist jedoch die Differenz zwischen dem Bogenmass und seiner entsprechenden Sehne so gering, dass sie vernachlässigt werden kann. Für den Radius, an dem der Taststift des Mikrometers angreifen muss, ist zu beachten, dass bei Festlegung, dass 1/100 mm Hebelweg einer Sekunde Zeitvortrieb entsprechen soll, der Umfang eines solchen Kreises 864 mm sein muss
(24h × 60 min x 60 sec = 86400
$sec = \frac{86400}{100} = 864$ mm.

Der Radius eines Kreises, dessen Umfang 864 mm beträgt, ist 137,51 mm. An diesem Radius muss also der Taststift des Mikrometers angreifen, wenn bei dem Zeitvorschub 1/100 mm = 1 sec Zeitvortrieb sein soll.

Bei der Auswertung von Fahrtschreiberdiagrammen sollen nun nicht nur die sog. 24-Stunden- oder 1-Tag-Scheiben ausgewertet werden, sondern auch die sog. 7-Tage-Scheiben, die eine 26-Stunden-Teilung haben. Dies sind Scheiben, die in Bündeln zu sieben oder acht Stück zusammengefasst sind und die im Verlaufe einer Woche nacheinander beschriftet werden. Jede Scheibe ist hierfür mit einem einen Zeitraum von zwei Stunden umfassenden Ausschnitt versehen und die Schreibstifte beschreiben durch diesen Ausschnitt hindurch die darunter liegenden Scheiben, wobei der Aufzeichnungsraum von 24 Stunden verteilt ist auf einen Scheibenumfang von 26–2 Stunden. Um auch diese Scheiben mit einem zwei Stunden umfassenden Ausschnitt und einer demzufolge zusammengedrängten Zeitskala auswerten zu können, kann das Mikrometer gemäss der weiteren Erfindung so verstellbar und rastbar angeordnet sein, dass es noch an einem zweiten Punkte des Radius des Hebels angreifen kann. Bei einer 26-Stunden-Teilung ist der Zeitvortrieb von
1/100 mm = 1 sec 936 : 2 π = 147,02 mm (26 h × 60 min × 60 sec = 93600 sec = $\frac{93600}{100}$ mm = 936 mm).

Bei einer 26-Stunden-Teilung der Diagrammscheibe muss also das Mikrometer an einem Punkt des Hebels angreifen, der 147,02 mm vom Mittelpunkt der Diagrammauflage entfernt ist, also einem Kreisumfang von 936 mm entspricht.

Gemäss einer Ausbildung der Erfindung ist das Mikrometer in einem Schlitten an einem Träger auf mehreren Führungsstangen verschiebbar gelagert und kann durch Rastvertiefungen bzw. Raststifte in zwei Stellungen relativ zu dem Hebel festgelegt werden.

Gemäss einer weiteren Ausbildung der Erfindung ist die Diagrammauflage mit dem Hebel über eine ein- und ausrückbare Kupplung verbunden. Dadurch ist es möglich, die Diagrammauflage vor Beginn des Auswertevorganges relativ zu dem Okular des Mikroskopes vorauszurichten auf den für den Messvorgang essentiellen Teil des Diagrammes. Die Kupplung besteht aus einem mit der Diagrammauflage verbundenen Zahnrad und zwei Rastklinken, die mit dem Hebel verbunden sind und die in das Zahnrad einrasten.

Weitere Einzelheiten der Erfindung ergeben sich anhand der detaillierten Beschreibung eines Ausführungsbeispieles der Erfindung unter Bezugnahme auf die beiliegenden Zeichnungen.

In diesen Zeichnungen zeigt

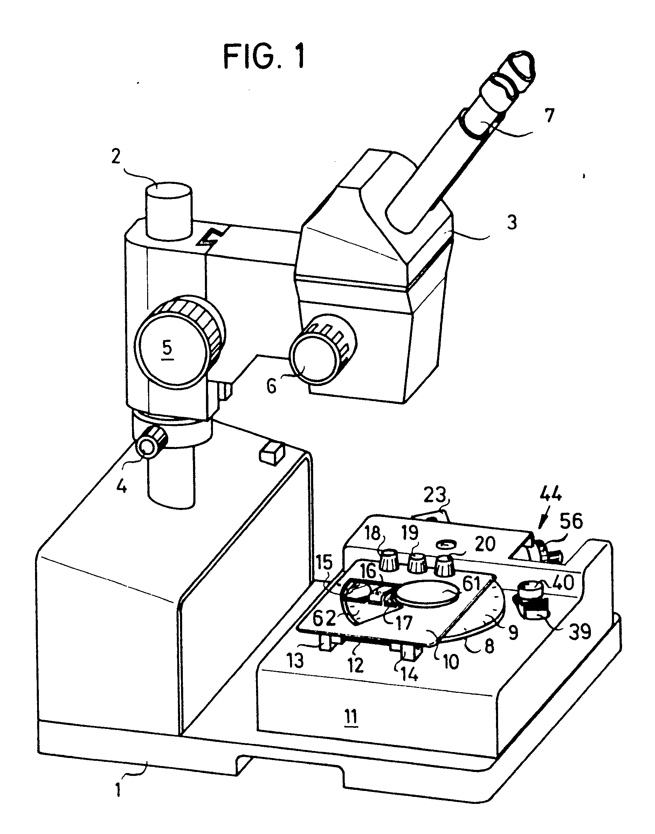

Fig. 1 eine Übersichtsdarstellung des gesamten Gerätes,
Fig. 2 die erfindungsgemässe Zeitvortriebsanordnung, während
Fig. 3A einen Ausschnitt aus einem auszuwertenden Fahrtschreiberdiagramm darstellt,
Fig. 3B ist eine vergrösserte Darstellung des Geschwindigkeitsverlaufes auf den letzten Metern Fahrweg,
Fig. 4 zeigt ein Detail der Fig. 1 im Schnitt.

Auf einer massiven Trägerplatte 1 des Gerätes ist ein Ständer 2 befestigt. Das Messmikroskop 3 ist verschwenkbar um den Ständer 2 angeordnet, kann aber durch eine Stellschraube 4 in der eingestellten Lage festgestellt werden. Eine weitere Stellschraube 5 dient dazu, das Messmikroskop 3 auf- und abwärts in Richtung auf die auszuwertende Diagrammscheibe zu verstellen. Eine weitere Stellschraube 6 dient der Scharfeinstellung des Binokulars 7.

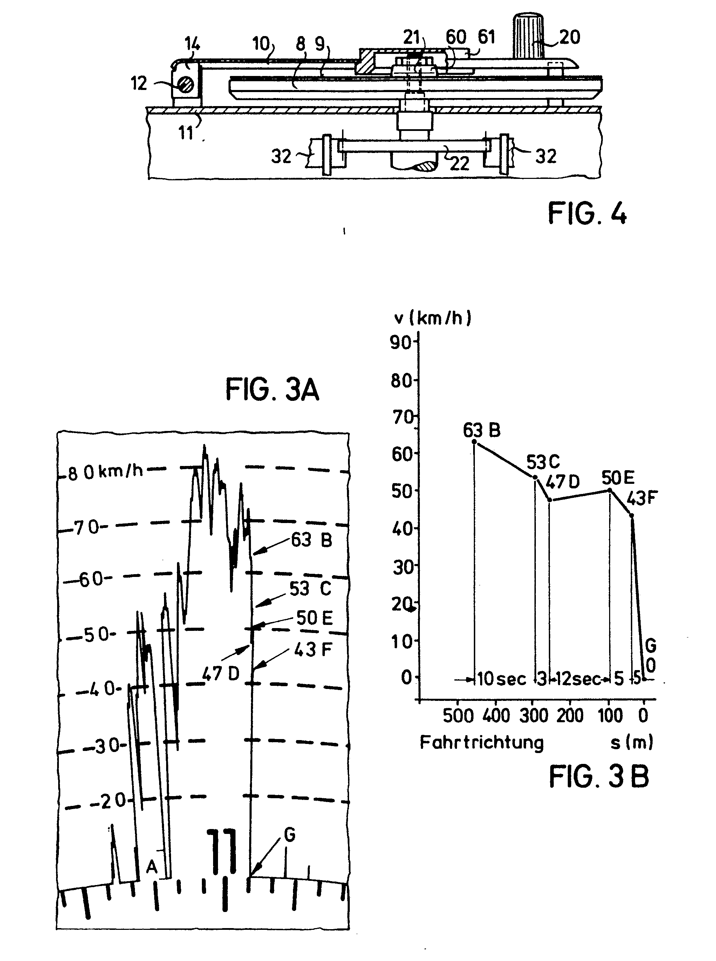

Auf dem Träger 1 sieht man eine Diagrammauflage 8, auf der sich eine Diagrammscheibe 9 befindet. Die Diagrammscheibe 9 ist relativ zur Diagrammauflage 8 mittels eines Zapfens 60 zentriert aufgelegt (Fig. 4). Eine Kappe 61 überdeckt den Zentrierzapfen 60. In einer Klappe 10, die auf einer in einem Gehäuse 11 angeordneten Achse 12 mittels zweier Augen 13 und 14 verschwenkbar angeordnet ist, sind Teile 15, 16, 17 aus Silikatglas durch drei Stellschrauben 18, 19, 20 verstellbar angeordnet. Die Teile 15 bis 17 tragen je für sich eine sog. «Leitlinie». Mit Hilfe der Stellschrauben 18, 19, 20 ist es möglich, die «Leitlinie» in den Teilen 15, 16, 17 und eine entsprechende Geschwindigkeitsmarkierung innerhalb des Diagrammes, die weitestgehend der Beschleunigung vom Geschwindigkeitswert 0 bis ∞ in der Zeit 0 entspricht, zueinander auszurichten. Das Ausrichten der «Leitlinie» auf das auszuwertende Diagramm hat den Zweck, die Messvorrichtung anzupassen an die individuelle Diagrammscheibe bzw. den Fahrtschreiber, mit dem die Diagrammscheibe beschriftet worden ist. Dies ist deswegen wesentlich, weil Toleranzen in der Schreibstiftführung der einzelnen Geräte untereinander und auch Toleranzen im Druck der Diagrammscheiben untereinander nicht auszuschliessen sind. Innerhalb des in Fig. 3A gezeigten Geschwindigkeitsdiagrammes findet man eine solche «Leitlinie» beispielsweise im untersten Teil A des Geschwindigkeitsdiagrammes, in dem von 0 auf beispielsweise 5 km/h beschleunigt wird. Hier ist einerseits die Beschleunigung ausserordentlich gross, andererseits liegt es auch im Prinzip des Messsystems, das im unteren Geschwindigkeitsbereich mit einer gewissen Verzögerung anspricht, dass hier der «ideale Radius» in der Bewegung des Geschwindigkeitsschreibstiftes am genauesten auffindbar ist. Das Einstellen der «Leitlinie» wird aber immer ein Mittelwert zwischen mehreren hierfür geeigneten Diagrammteilen A sein.

Ausgehend von diesem eingestellten «idealen Radius» bzw. dieser «Leitlinie» erfolgt nun die Auswertung insbesondere des Geschwindigkeitsabfalles vor dem Unfall. Dazu muss mit Hilfe des erfindungsgemässen Zeitvortriebes ermittelt werden, welche Neigung die abfallende bzw. ansteigende Geschwindigkeitslinie (ausgedrückt in Sekunden) hat zu der «idealen Leitlinie». Hieraus lässt sich dann die Abnahme der Geschwindigkeit und damit auch das Fahrverhalten des Fahrers kurz vor dem Unfall genau ermitteln. Im einzelnen soll hierauf noch unter Bezugnahme auf Fig. 3A und B im weiteren Verlauf der Beschreibung eingegangen werden.

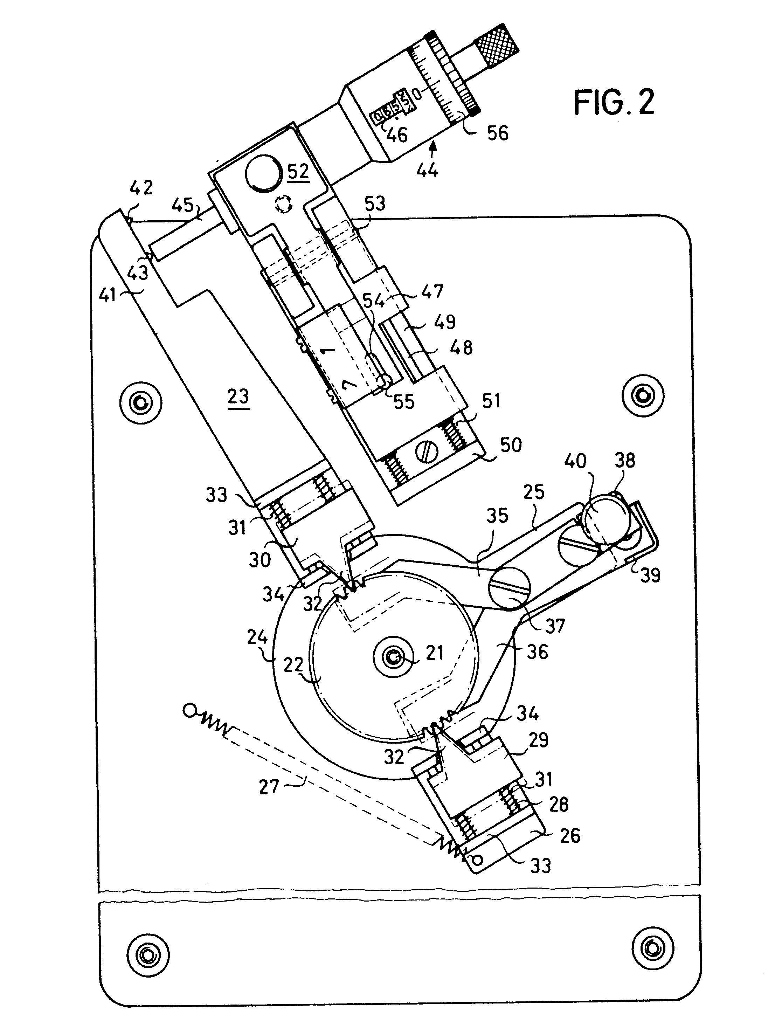

In Fig. 2 ist nun ein Zeitantrieb für die Diagrammauflage 8 gezeigt, wie sie erfindungsgemäss realisiert worden ist, um einen möglichst exakten Zeitvortrieb zur Ausmessung des Neigungswinkels der Geschwindigkeitskurve zwischen zwei verschiedenen Bezugspunkten zu ermöglichen. Die Diagrammauflage 8 ist auf der Achse 21 befestigt. Mit der Achse 21 ist auch ein Zahnrad 22 verbunden. Drehbar ist auf der Achse 21 und zentrisch zu dieser ein Hebel 23 gelagert, der in seinem unteren Teil 24 kreisförmig gestaltet ist und zwei Vorsprünge 25 und 26 besitzt. An dem Teil 26 des Hebels 23 ist eine Feder 27 eingehängt, die den Hebel im Uhrzeigersinne beeinflusst. Auf dem Hebel 23 bzw. auf seinem Teil 26 sind auf je zwei Führungsstäben 28 Rastklinken 29, 30 gelagert, die durch Federn 31 in Richtung auf das Zahnrad 22 beeinflusst werden derart, dass die Klinkenspitzen 32 in Eingriff gedrückt werden mit einem der Zähne des Zahnrades 22. Die Federn 31 stützen sich dabei an Vorsprüngen 33 auf dem Hebel 23 bzw. auf seinem Teil 26 ab. Weitere Vorsprünge 34 auf dem Hebel 23 bzw. seinem Teil 26 dienen der Führung der Rastklinken 29, 30.

Mit Hilfe zweier scherenförmig angeordneter Betätigungshebel 35, 36 können die Rastklinken 29, 30 nach aussen gedrückt werden. Dabei nehmen die Klinken 29, 30 die strichpunktierte Lage ein, ebenso wie die Scherenhebel 35 und 36. Die Klinken sind dann aus dem Zahnrad 22 ausgerückt. Um dies bewerkstelligen zu können, sind die beiden Betätigungshebel 35, 36 auf einer Achse 37 auf dem Teil 25 des Hebels 23 schwenkbar gelagert. Drückt man die beiden Enden 38 und 39 der Betätigungshebel 35 und 36 zusammen, dann nehmen diese die strichpunktierte Stellung ein und rücken die Klinken 29 und 30 aus dem Zahnrad 22 aus. In dieser ausgerückten Stellung der Kupplung sind die Hebel miteinander verrastet. Drückt man auf einen Knopf 40, dann wird diese Rastung aufgehoben, und die Betätigungshebel 35 und 36 gehen in die gestrichelte Stellung zurück, in der die Klinken 29 und 30 wieder in das Zahnrad 22 eingerückt sind.

In seinem oberen Teil 41 ist der Hebel 23 verjüngt und trägt zwei Vorsprünge 42 und 43. Der Vorsprung 42 ist der Angriffspunkt des Mikrometers 44, wenn eine 26-Stunden-Scheibe (7-Tage-Scheibe) ausgewertet werden soll, der Vorsprung 43 ist der Angriffspunkt des Mikrometers 45, wenn eine 24-Stunden-Scheibe (1-Tage-Scheibe) auszuwerten ist.

Wie bereits oben dargelegt wurde, haben die Vorsprünge 42 und 43 einen bestimmten, genau definierten Abstand von dem Mittelpunkt der Achse 21 der Diagrammauflage 8. Für die 24-Stunden-Scheibe ist der Abstand des Vorsprunges 43 vom Mittelpunkt der Achse 21, wie bereits oben erläutert, 137,51 mm; für den Vorsprung 42 beträgt dieser Abstand 147,02 mm.

Das Mikrometer 44 ist im vorliegenden Falle ein Einbaumikrometer mit einer Digitalanzeige 46. Das Mikrometer 44 ist gehalten in einem Schlitten 47, und dieser Schlitten 47 ist auf zwei Führungsstangen 48 in einem Träger 49 verschiebbar gelagert. Der Träger 49 hat ein abgewinkeltes Ende 50, in dem die beiden Führungsstangen 48 befestigt sind. Federn 51 geben dem Schieber 47 eine definierte Lage, sobald sie freigegeben sind. Ein Hebel 52 ist um eine Achse 53 schwenkbar in dem Schlitten 47 gelagert. An seinem unteren Ende ist der Hebel 52 mit einem Längsschlitz 54 versehen und umfasst einen Raststift 55. Dieser Raststift wirkt mit zwei nicht gezeigten Rastvertiefungen in dem Träger 49 zusammen und definiert die beiden Stellungen des Taststiftes 45 des Mikrometers 44 relativ zu den Vorsprüngen 42 und 43. Wird durch Niederdrücken des Hebels 52 an seinem oberen Ende der Raststift 55 aus seiner einen Rastvertiefung ausgehoben, dann drücken die Federn 51 den Schieber 47 nach oben bis der Raststift 55 in die nächste Rastvertiefung eindringen kann. Beim Zurückstellen des Schiebers 47 müssen nach Lösen des Hebels 52 die Federn 51 überwunden werden.

Unter spezieller Bezugnahme auf die Zeichnungen Fig. 3A und 3B sei nun beschrieben, wie ein Auswertevorgang für eine Diagrammscheibe erfolgt. Nachdem man das Mikroskop 3 seitlich weggeschwenkt hat, kann man die Klappe 10 hochschwenken und die auszuwertende Diagrammscheibe 9 auf den Zapfen 60 aufspannen. Dabei erfolgt die Aufspannung so, dass der auszuwertende Aufzeichnungsbereich möglichst im Rahmen des Fensters 62 in der Klappe 10 erscheint, möglichst nahe an den Teilen 15 bis 17. Die Klappe 10 wird dann wieder geschlossen, und das Messmikroskop 3 zurückgeschwenkt und scharf eingestellt auf den auszuwertenden Teil des Diagrammes. Um nun die «Leitlinie» aufzufinden und einzustellen, wird der Knopf 18 verstellt, so dass die Strichmarkierung in dem Teil 15 in die richtige Position eingestellt wird. Hierfür wird nicht nur der Teil A des Diagrammes gemäss Fig. 3A herangezogen, sondern weitere Teile des Diagrammes, beispielsweise solche Teile, die durch eine sehr starke Beschleunigung und anschliessende Verzögerung entstehen, bei denen also zwischen einer Beschleunigung und einer Verzögerung sozusagen kein Zeitversatz ist. Aus verschiedenen Diagrammteilen wird sozusagen das Mittel gebildet, auf das die Markierung auf dem Teil 15 als Leitlinie eingestellt wird. Man hat damit den idealen Radius der Auslenkung des Geschwindigkeitsschreibstiftes ermittelt. Bewegt man jetzt die Diagrammscheibe durch Auskuppeln der Kupplungsklinken 30, 29 aus dem Zahnrad 22 beim Betätigen der beiden Hebel 38 und 39 in die Nähe des auszuwertenden Diagrammteiles, und rückt man die Kupplung durch Druck auf den Knopf 40 wieder ein bis die Klinken 32 in den Zähnen des Zahnrades 22 wieder verrastet sind, dann lässt sich die Diagrammscheibe nur noch über das Stellglied 56 des Mikrometers 44 in Vorwärts- und Rückwärtsrichtung verdrehen. Wesentlich ist hierbei, dass man ohne die Überwindung von Zahnspiel vorwärts und rückwärts drehen kann. Das Diagramm gemäss Fig. 3A verschiebt sich damit relativ zu der durch den Knopf 18 fest eingestellten «Leitlinie» auf dem Teil 15. Man beginnt die Auswertung beispielsweise im Punkte B, indem man über das Mikrometer das Diagramm relativ zur «Leitlinie» so verstellt, dass der Punkt B die «Leitlinie» schneidet. Man ermittelt für den Punkt B eine Geschwindigkeit von 63 km/h. Dieser Punkt ist in dem Diagramm gemäss Fig. 3B aufgetragen. Dann verstellt man das Mikrometer bis die Leitlinie den Punkt C schneidet. Am Mikrometer kann man ablesen, dass zwischen dem Punkt B und dem Punkt C 10 Sek. vergangen sind. Rechnerisch lässt sich ermitteln, dass dies einem Weg von etwa 160 m entspricht. Anders ausgedrückt, 295 m vor der Geschwindigkeit 0 hatte das Fahrzeug noch die Geschwindigkeit 53 km/h. Diese Verzögerung ist offensichtlich nur darauf zurückzuführen, dass kein Gas mehr gegeben wurde. Im Punkte 53 km/h wurde bis zum Punkte D, bei dem eine Geschwindigkeit von 47 km/h errechnet wurde, leicht gebremst, da hier der Geschwindigkeitsverlauf erkennen lässt, dass in nur 3 Sek. eine Verzögerung von 53 km/h auf 47 km/h erfolgte. Dann wurde nochmals leicht beschleunigt bis zum Punkte E, wodurch 50 km/h erreicht wurden. Dann wurde wiederum bis zum Punkte F leicht gebremst, was einem Zeitversatz von 5 Sek. entspricht, und erst die letzten 25 m wurde eine Vollbremsung zwischen dem Punkte F und dem Punkte G = 0 km/h durchgeführt, so dass ein steiler Geschwindigkeitsabfall stattfand. Durch das Ausmessen der Neigung der Geschwindigkeitslinie zwischen den Punkten B und G lässt sich also der Fahrtverlauf auf den letzten 450 m vor dem Unfall ganz deutlich rekonstruieren und damit auch das Fahrverhalten des Fahrers vor dem endgültigen Stillstand. Dieser Stillstand muss nicht gleichbedeutend sein mit einem Zusammenstoss. Es kann sich auch um irgendein anderes Ereignis in diesem Zusammenhang handeln, z.B. ein gravierendes Verrutschen der Ladung, was zu einem erheblichen Sachschaden geführt hat.

Durch die Erfindung ist es möglich, die Ausmessung des Geschwindigkeitsdiagrammes hinsichtlich seines Zeitversatzes mit hoher Genauigkeit durchzuführen und dies ohne dass dabei auf das Entstehen von Zahnspiel zwischen Vorwärts- und Rückwärtsdrehen usw. Rücksicht genommen werden muss. Der Auswertevorgang lässt sich damit in einem sehr viel kürzeren Zeitraum beenden und bedarf seitens der Bedienungsperson auch einer wesentlich geringeren Aufmerksamkeit, kurz: er ist besser zu handhaben.

**Patentansprüche**

1. Diagrammauswertegeräte für die Unfalldiagrammauswertung von Fahrtschreiber-Diagrammscheiben, bei dem die die auszuwertenden Diagrammscheiben tragende Diagrammauflage zur Ermittlung der Zeitwerte bei der Auswertung über Antriebsmittel mindestens über einen kleinen Winkelweg manuell antreibbar ist und bei dem Mess- und Anzeigemittel vorgesehen sind, um den Zeitvortrieb zwischen zwei Punkten des Diagrammes als Zeitwert sichtbar zu machen, dadurch gekennzeichnet, dass mit der Diagrammauflage ein Hebel (23) verbunden ist, und dass als Antriebsmittel ein Mikrometer (44) auf den Hebel an einem solchen Radius vom Mittelpunkt der Diagrammauflage (8) einwirkt, dass im Zeitvortrieb der Diagrammauflage ein Weg des Hebels von $\frac{1}{100}$ mm, gemessen am Angriffspunkt des Mikrometers am Hebel, einer Sekunde entspricht.

2. Diagrammauswertegerät nach Anspruch 1, dadurch gekennzeichnet, dass zur Auswertung von Diagrammscheiben (9) mit 24-Stunden-Teilung (1-Tag-Scheiben) sowohl als auch mit 26-Stunden-Teilung (7-Tage-Scheiben) zwei Angriffspunkte (42, 43) des Mikrometers (44) an dem Hebel (23) vorgesehen sind, wobei das Mikrometer (44) in beiden Stellungen relativ zum Hebel (23) rastbar ist.

3. Diagrammauswertegerät nach Anspruch 1, dadurch gekennzeichnet, dass das Mikrometer (44) in einem Schlitten (47) gehalten ist, der in einem Träger (49) an mehreren Führungsstangen (48) verschiebbar ist, wobei ein Raststift (55) im Schlitten (47) mit Rastvertiefungen im Träger (49) zusammenwirkt.

4. Diagrammauswertegerät nach Anspruch 1, dadurch gekennzeichnet, dass das Mikrometer (44) ein Digitalmikrometer ist, welches bei Drehung seines Stellgliedes (56) mit seinem Taststift (45) auf den mit der Diagrammauflage (8) verbundenen Hebel (23) einwirkt.

5. Diagrammauswertegerät nach Anspruch 2, dadurch gekennzeichnet, dass die Angriffspunkte (42, 43) im Hebel (23) Vorsprünge sind, die mit dem Taststift (45) des Mikrometers (44) zusammenwirken.

6. Diagrammauswertegerät nach Anspruch 1, dadurch gekennzeichnet, dass der Hebel (23) über eine ein- und ausrückbare Kupplung (22, 32) mit der Diagrammauflage (8) verbunden ist, derart dass durch das Ausrücken der Kupplung eine manuelle Vorausrichtung des auszuwertenden Aufzeichnungsbereiches der Diagrammscheibe (9) möglich ist.

7. Diagrammauswertegerät nach Anspruch 6, dadurch gekennzeichnet, dass die Kupplung ein mit der Diagrammauflage (8) fest verbundenes Zahnrad (22) und zwei in das Zahnrad ein- und ausrückbare Rastklinken (32) umfasst.

8. Diagrammauswertegerät nach Anspruch 7, dadurch gekennzeichnet, dass die Rastklinken (32) über scherenförmig angeordnete Hebel (35/36) beeinflussbar sind.

9. Diagrammauswertegerät nach Anspruch 1, dadurch gekennzeichnet, dass der Winkelweg, über den die Diagrammauflage (8) durch das Mikrometer (44) antreibbar ist, etwa einer halben bis einer Stunde auf der Zeiteinteilung der Diagrammscheibe (9) entspricht.

## Claims

1. Diagram evaluating device for accident diagram evaluation of diagram disks for tachographs in which the diagram support carrying the diagram disk to be evaluated is manually driven by dryving means over at least a small angular distance for determining time values in the evaluation process and which is provided with measuring and indicating means to make visible the time value between two points of the diagram, characterized in that the diagram support is connected with a lever (23) and in that as driving means there is a micrometer (44) cooperating with the lever at such a radius from the center point of the diagram support (8), that in the time drive of the diagram support a movement of the lever by 1/100 mm measured at the engaging point of the micrometer and the lever corresponds to one second.

2. Diagram evaluating device according to Claim 1, characterized in that for evaluating diagram disks (9) with a 24-hour-division (1-day-disks) as well as also with a 26-hour-division (7-day-disks) there are two points (42, 43) of engagement for the micrometer (44) at the lever (23), micrometer (44) being arrestable in the two positions relatively to the lever (23).

3. Diagram evaluating device according to Claim 1, characterized in that the micrometer (44) is supported by a slide (47) which may be moved at a support (49) along several guide bars (48) a locking pin (55) in the slide (47) cooperating with arresting notches in the support (49).

4. Diagram evaluating device according to Claim 1, characterized in that the micrometer (44) is a digital micrometer which by means of the rotation of its setting member (56) cooperates through a sensing pin (45) with the lever (23) connected to the diagram support (8).

5. Diagram evaluating device according to Claim 2, characterized in that the points of engagement (42, 43) at the lever (23) are projections cooperating with the sensing pin (45) of the micrometer (44).

6. Diagram evaluating device according to Claim 1, characterized in that the lever (23) by means of an engageable clutch (22, 32) is connected to the diagram support (8) so that by disengaging the clutch the manual preliminary adjustment of the recording range to be evaluated on the diagram disk (9) is possible.

7. Diagram evaluating device according to Claim 6, characterized in that the clutch comprises a toothed wheel (22) firmly connected to the diagram support (8) and two pawls (32) to be moved into and out of engagement with the toothed wheel (22).

8. Diagram evaluating device according to Claim 7, characterized in that the pawls (32) may be influenced by two levers (35, 36) in the form of shears.

9. Diagram evaluating device according to Claim 1, characterized in that the angular distance through which the diagram support (8) is to be driven by the micrometer (44) corresponds to approximately half an hour or an hour on the time scale of the diagram disk (9).

## Revendications

1. Dispositif d'exploitation de disques de diagramme pour l'analyse d'accidents à l'aide de diagrammes tracés par l'enregistreur de route, dans lequel la table portegraphique supportant les disques de diagramme à analyser peut être entraînée manuellement, pour la détermination des valeurs de temps lors de l'analyse, par l'intermédiaire de moyens d'entraînement, sur au moins un petit parcours angulaire et dans lequel sont prévus de moyens de mesure et d'affichage pour visualiser l'avancement de temps entre deux points du diagramme comme valeurs de temps, caractérisé par le fait qu'à la table portegraphique est relié un levier (23) et que, comme moyens d'entraînement, un micromètre (44) agit sur le levier à un rayon tel depuis le centre de la table porte-graphique (8) que, dans l'avancement de temps de la table porte-graphique, un parcours du levier de 1/100 mm, mesuré au point d'application du micromètre au levier, corresponde à une seconde.

2. Dispositif d'exploitation de disques de diagramme selon la revendication 1, caractérisé par le fait que, pour l'exploitation de disques de diagramme (9) avec une graduation de 24 heures (disques de 1 jour) aussi bien qu'avec une graduation de 26 heures (disques de 7 jours), sont prévus deux points d'application (42, 43) du micromètre (44) sur le levier (23), le micromètre (44) pouvant être encliqueté dans les deux positions par rapport au levier (23).

3. Dispositif d'exploitation de disques de diagramme selon la revendication 1, caractérisé par le fait que le micromètre (44) est maintenu dans un chariot (47) qui peut être déplacé dans un support (49) sur plusieurs tiges de guidage (48), une tige d'arrêt (55) dans le chariot (47) coopérant avec des crans dans le support (49).

4. Dispositif d'exploitation de disques de diagramme selon la revendication 1, caractérisé par le fait que le micromètre (44) est un micromètre numérique qui agit, lors de la rotation de son élément de réglage (56), avec son palpeur (45) sur le levier (23) relié à la table porte-graphique (8).

5. Dispositif d'exploitation de disques de diagramme selon la revendication 2, caractérisé par le fait que les points d'application (42, 43) au levier (23) sont des saillies qui coopèrent avec le palpeur (45) du micromètre (44).

6. Dispositif d'exploitation de disques de diagramme selon la revendication 1, caractérisé par le fait que le levier (23) est relié à la table porte-graphique (8) par l'intermédiaire d'un accouplement débrayable et embrayable (22, 32), de telle sorte que le débrayage de l'accouplement permette un préalignement manuel de la zone d'enregistrement à exploiter du disque de diagramme (9).

7. Dispositif d'exploitation de disques de diagramme selon la revendication 6, caractérisé par le fait que l'accouplement comprend une roue dentée (22) solidaire de la table porte-graphique (8) et deux cliquets d'arrêts (32) pouvant engrener et désengrener avec ladite roue dentée.

8. Dispositif d'exploitation de disques de diagramme selon la revendication 7, caractérisé par le fait que les cliquets d'arrêt (32) peuvent être actionnés par l'intermédiaire de leviers (35/36) disposés en forme de ciseaux.

9. Dispositif d'exploitation de disques de diagramme selon la revendication 1, caractérisé par le fait que le parcours angulaire sur lequel peut être entraînée la table porte-graphique (8) par le micromètre (44) correspond à environ une demi-heure à une heure sur la graduation horaire du disque de diagramme (9).

# FIG. 1

FIG. 2

FIG. 4

FIG. 3A

FIG. 3 B